## Europäisches Patentamt

## European Patent Office

## Office européen des brevets

(11) Veröffentlichungsnummer: **0 296 514**
**A2**

# (12) EUROPÄISCHE PATENTANMELDUNG

(21) Anmeldenummer: 88109759.6

(22) Anmeldetag: 18.06.88

(51) Int. Cl.⁴: **B66D 1/60 , A01G 23/00**

(30) Priorität: 26.06.87 DE 3721227

(43) Veröffentlichungstag der Anmeldung:
**28.12.88 Patentblatt 88/52**

(84) Benannte Vertragsstaaten:
**AT BE CH DE ES FR GB IT LI NL SE**

(71) Anmelder: **Gebrüder Jäckle GmbH**
**Maschinen- & Gerätebau**
**Büsslingerstrasse 25**
**D-7709 Hilzingen 3(DE)**

(72) Erfinder: **Jäckle, Franz**
**Büsslinger Strasse 25**
**D-7709 Hilzingen 3(DE)**
Erfinder: **Jäckle, Lothar**
**Büsslinger Strasse 25**
**D-7709 Hilzingen 3(DE)**
Erfinder: **Jäckle, Georg**
**Büsslinger Strasse 25**
**D-7709 Hilzingen 3(DE)**

(74) Vertreter: **Weiss, Peter**
**Schlachthausstrasse 1 Postfach 466**
**D-7700 Singen a.H.(DE)**

(54) **Vorrichtung zum Vorliefern von Holzstämmen.**

(57) Bei einer Vorrichtung zum Vorliefern von Holzstämmen mit einem von einer Winde (10) abrollba-ren Seil (9), welches nach der Winde (10) über eine Rolle (8) geführt ist, die an einer etwa horizontalen Führung (2) etwa senkrecht zur Vorlieferrichtung der Holzstämme verschiebbar angeordnet ist, soll die Führung (2) als Doppelführung (17) ausgebildet sein, an welcher zumindest zwei Umlenkrollen (8a, 8b) für zwei getrennte Seile (9a, 9b) verschiebbar angeord-net sind.

Fig. 2

## Vorrichtung zum Vorliefern von Holzstämmen

Die Erfindung betrifft eine Vorrichtung zum Vorliefern von Holzstämmen mit einem von einer Winde abrollbaren Seil, welches nach der Winde über eine Rolle geführt ist, die an einer etwa horizontalen Führung etwa senkrecht zur Vorlieferrichtung der Holzstämme verschiebbar angeordnet ist.

Eine derartige Vorrichtung ist aus der DE-PS 34 26 128 bekannt. Diese Vorrichtung hat den Vorteil, daß das Vorliefern von Holzstämmen im stehenden Bestand sehr schonend für den verbleibenden Bestand erfolgt, da infolge des Einzugswinkels die vorzuliefernden stämme angehoben werden und damit keine Verletzungen an Wurzelanläufen stattfinden.

Ferner kann die Bedienungsperson mit den einzuziehenden Holzstämmen mitlaufen und jeweils durch Fernsteuerung den Einzugswinkel zur Zugmaschine verändern, so daß Hindernissen, beispielsweise stehenden Bäumen, aus dem Weg gegangen werden kann. Auch die Wirtschaftlichkeit des Rückeverfahrens wird gesteigert, da mehrere Seillinien von einem Standplatz der Zugmaschine aus bearbeitet werden können. In der Praxis hat sich diese Vorrichtung als sehr gut erwiesen.

Die Erfinder haben sich aber zum Ziel gesetzt, diese Vorrichtung noch weiter zu verbessern und insbesondere sie noch wirtschaftlicher zu gestalten. Ferner soll ein Nachrüsten bereits bestehender Rückevorrichtungen, insbesondere für Starkholz, mit Doppeltrommelwinden möglich und wirtschaftlich sinnvoll sein.

Zur Lösung dieser Aufgabe führt, daß die Führung als Doppelführung ausgebildet ist, an welcher zumindest zwei Umlenkrollen für zwei getrennte Seile verschiebbar angeordnet sind.

Dies bedeutet, daß nunmehr mit zwei Seilen gearbeitet werden kann, wobei es zwar möglich ist, daß die beiden Seile in die gleiche Richtung, aber beispielsweise in unterschiedliche Seillinien hinein ausgezogen werden, jedoch es aber als vorteilhaft wegen der Kräftebeanspruchung der Vorrichtung erscheint, wenn die Seile in entgegengesetzte Richtungen ausgezogen werden. D. h., zwei Mann können beidseits der Vorrichtung vorliefern, so daß die Vorliefergeschwindigkeit erheblich erhöht wird.

Ferner sind heute eine ganze Reihe von Zugmaschinen im Einsatz, welche bislang ausschließlich zum Rücken von Starkholz verwendet werden. Diese Zugmaschinen sind bevorzugt mit einer Doppeltrommelwinde ausgestattet. Mit der erfindungsgemäßen Doppelführung ist ein Nachrüsten gerade dieser Maschinen wirtschaftlich äußerst sinnvoll, wobei allerdings dann meist auch die Zugkraft der Winden beschränkt werden muß, um eine Gefährdung der Zugmaschine durch zu hohe seitliche Zugbelastung zu verhindern.

Bevorzugt ist jede Umlenkrolle mit einer eigenen Laufkatze verbunden. Ferner soll jede Laufkatze auch einen eigenen Antrieb bzw. eine eigene Antriebsrolle besitzen. Dieser Antrieb ist dann wiederum von jeweils einer getrennten Fernsteuerung ansteuerbar. Hierdurch erfolgt eine völlig unabhängige Bedienung der Doppelführung.

Bevorzugt ist die Doppelführung über ein entsprechendes Stützschild bzw. ein Stirngerüst mit einer Zugmaschine verbunden, wie dies im weiteren in der DE-PS 34 26 128 ausgeführt ist.

Im Rahmen der Erfindung ist einmal daran gedacht, die Doppelführung aus zwei nebeneinanderliegenden Rohren zu bilden. Diese Rohre können einen runden, quadratischen oder mehreckigen Querschnitt aufweisen. Entsprechend diesem Querschnitt ist auch die Laufkatze geformt, so daß sie entlang der Doppelführung gleiten kann.

In einem weiteren Ausführungsbeispiel ist jedoch daran gedacht, die Doppelführung als ein H-Profil auszuführen, dessen Seitenschenkel jeweils von einer Laufkatze umgriffen werden. Dabei besteht die Laufkatze aus einem U-förmigen Profil, welches wiederum die Seitenschenkel mit Laufrollen umgreift. Über diese Laufrollen kann die Laufkatze entlang dem H-Profil verfahren werden.

Durch die vorliegende Erfindung wird auch ein gänzlich neues Verfahren geschaffen, da es bislang nur möglich war, von einer Seite zur Zugmaschine vorzuliefern. Mit dem erfindungsgemäßen Verfahren wird jedoch die Möglichkeit geschaffen, aus zwei unterschiedlichen Richtungen Holzstämme getrennt vorzuliefern, wobei unter der unterschiedlichen Richtung auch zwei Vorlieferungen auf der gleichen Seite der Zugmaschine zu verstehen sind. Wie oben erwähnt, ist aber wegen der entsprechenden Belastung der Zugmaschine ein Anziehen der Holzstämme aus sich gegenüberliegenden Richtungen zu bevorzugen.

Weitere Vorteile, Merkmale und Einzelheiten der Erfindung ergeben sich aus der nachfolgenden Beschreibung bevorzugter Ausführungsbeispiele sowie anhand der Zeichnung: diese zeigt in

Fig. 1 eine vereinfachte Darstellung einer erfindungsgemäßen Vorrichtung zum Rücken von Schwachholz, aufgebaut auf einer Zugmaschine;

Fig. 2 eine Draufsicht auf ein Ausführungsbeispiel einer erfindungsgemäßen Führung;

Fig. 3 einen Querschnitt durch ein weiteres Ausführungsbeispiel einer Führung.

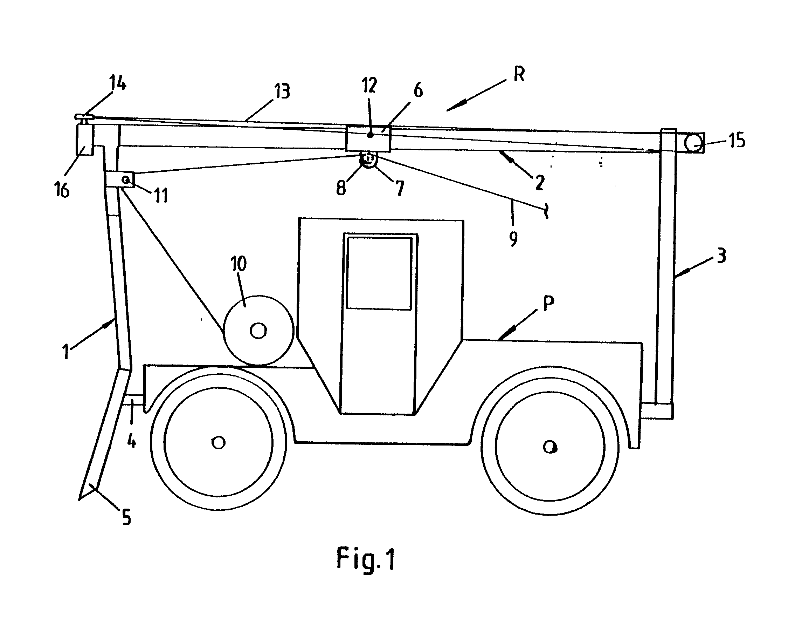

Nach Fig. 1 ist eine Vorrichtung R zum Rücken von Schwachholz auf einer Zugmaschine P aufgebaut. Dies hat zum einen den Vorteil, daß für den Antrieb der Vorrichtung R die Hydraulik der Zugmaschine mitbenutzt werden kann und zum anderen die Zugmaschine P selbst als Gewicht zum Abstützen der Vorrichtung R dient. In dem vorliegenden Ausführungsbeispiel ist der Übersichtlichkeit halber die entsprechende Hydraulik und deren Verbindungen zum Antrieb der Vorrichtung R nicht dargestellt.

Die Vorrichtung R besteht im wesentlichen aus drei Teilen, nämlich einem Stützschild 1, einer Führung 2 und einem Stirngerüst 3. Das Stützschild 1 ist im vorliegenden Ausführungsbeispiel an ein nur schematisch angedeutetes Hydraulikgestänge 4 der Zugmaschine P angekoppelt und kann mit diesem angehoben bzw. abgesenkt werden.

Beim Absenken trifft das Stützschild 1 mit Stelzen 5 auf den Waldboden und bietet so ein Widerlager gegen die Zugrichtung der einzuholenden Stämme. Ferner kann durch das Hydraulikgestänge 4 auch die Lage des Stützschildes 1 im Verhältnis zur Zugmaschine P verändert werden.

An der Vorderseite der Zugmaschine P gegenüber dem Stützschild 1 ist das Stirngerüst 3 lösbar befestigt. Zwischen dem Stirngerüst 3 und dem Stützschild 1 ist die Führung 2 eingespannt, wobei in der Regel sowohl das Stirngerüst 3 wie auch das Stützschild 1 die Führung 2, wenn sie als Rohr ausgebildet ist, mit einem Flansch umfaßt.

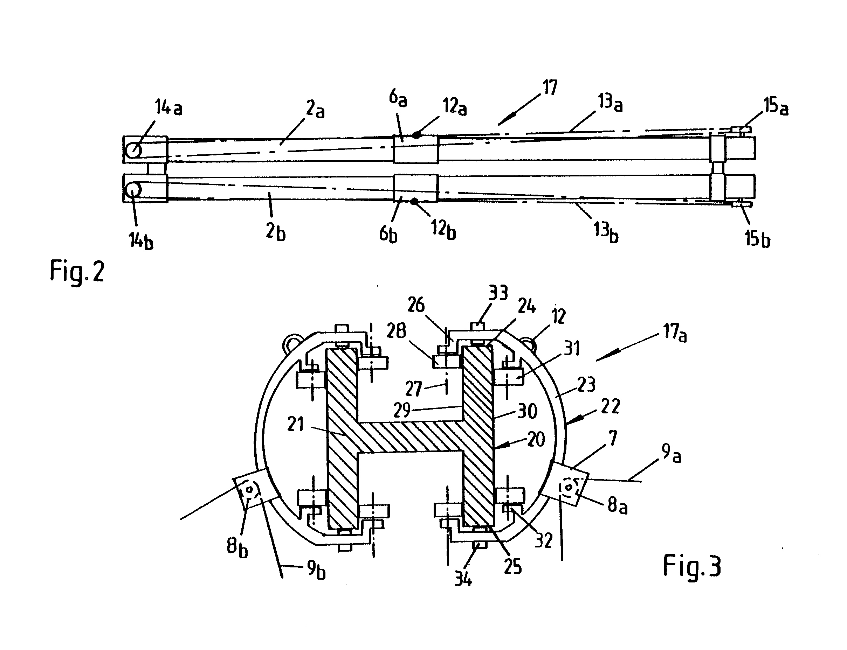

Auf die Führung 2 ist eine Laufkatze 6 aufgeschoben, welche im Ausführungsbeispiel nach den Figuren 1 und 2 als Rohrhülse ausgebildet ist. Dieser Laufkatze 6 sind Laschen 7 angeformt, welche eine gestrichelt dargestellte Umlenkrolle 8 zwischen sich halten. Über diese Umlenkrolle 8 ist ein Seil 9 von einer Winde 10 geführt, welche der Zugmaschine P aufsitzt. Der Windenantrieb wird dabei ebenfalls von der Zugmaschine P übernommen.

Zur Verbesserung des Abrollens des Seiles 9 ist noch eine zusätzliche Umlenkrolle 11 an dem Stützschild 1 vorgesehen.

An der Laufkatze 6 ist ein Befestigungshaken 12 zum Festlegen eines Endlosseiles 13 bzw. einer Endloskette vorgesehen, welche über eine Antriebsrolle 14 sowie eine Gegenrolle 15 geführt ist.

Wird die Antriebsrolle 14 in Drehung versetzt, so kann über die Endloskette 13 die Laufkatze 6 entlang der Führung 2 bewegt werden. Der nur schematisch angedeutete Antrieb 16 für die Laufkatze 6 wird ferngesteuert bedient. Auf diese Weise wird der Ausgangspunkt des Seiles 9 an der Umlenkrolle 8 für das Einholen der Stämme durch die Position der Laufkatze 6 bestimmt. Diese Position kann beim Ausziehen und beim Einholen des Seils 9 von dem Bedienungspersonal aus dem Bestand heraus ferngesteuert nach Wunsch verändert werden.

Weitere Vorrichtungsteile sind der DE-PS 34 26 128 zu entnehmen, so daß in dem vorliegenden Rahmen auf deren Beschreibung zu verzichten ist.

In Fig. 2 und 3 sind nun Führungen 2 dargestellt, welche das Einholen von stämmen beidseits der Zugmaschine P gestatten. In diesem Fall besteht bevorzugt die Winde 10 aus einer Doppeltrommelwinde, von welcher ein Zugseil zur Laufkatze 6a und das andere Zugseil zur Laufkatze 6b führt. Bei dem Ausführungsbeispiel nach Fig. 2 handelt es sich um eine Verdoppelung der Führung 2 nach Fig. 1 mit Laufkatze 6a und 6b, Endloskette 13a und 13b, Antriebsrolle 14a und 14b sowie Gegenrolle 15a und 15b. Entsprechend ist jeder Antriebsrolle 14 ein separater Antrieb zugeordnet, wobei jeder Antrieb für sich auf die Impulse einer Fernbedienung reagiert. Eine derartige Doppelführung 17 soll ebenfalls von einem Stützschild 1 bzw. einem Stirngerüst 3 an der Zugmaschine P gehalten sein. Diese Doppelführung 17 bietet sich vor allem dort an, wo bereits eine Zugmaschine P mit einer Doppeltrommelwinde zum Einziehen von Starkholz in Gebrauch ist.

In Fig. 3 ist ein anderes Ausführungsbeispiel einer Doppelführung 17a dargestellt. Zwischen dem Stützschild 1 und dem Stirngerüst 3 ist ein H-Profil 20 eingespannt. Dieses H-Profil kann, um Gewicht zu sparen, aus einem stranggepreßten Aluminiumprofil hergestellt sein.

Den beiden Seitenschenkeln 21 des H-Profils 20 sind jeweils Laufkatzen 22 zugeordnet, welche entlang ihrem jeweiligen Seitenschenkel 21 in bzw. gegen die Fahrtrichtung verfahrbar sind. Dabei besteht eine Laufkatze 22 aus einem etwa U-förmigen Profil 23. Dieses Profil 23 umgreift die beiden Randkanten 24 und 25 seines Seitenschenkels 21 und hintergreift den Seitenschenkel 21 mit jeweils einem Tragrahmen 26. Dieser Tragrahmen 26 dient zum Halten einer Achse 27 einer Laufrolle 28, welche an der Innenfläche 29 des Seitenschenkels 21 abrollt. Auch auf der Außenfläche 30 des Seitenschenkels 21 rollt eine Laufrolle 31, welche über einen weiteren Tragschenkel 32 mit dem U-Profil 23 verbunden ist.

Die Laufrollen 28 bzw. 31 können in entsprechenden Führungsschienen od. dgl. gleiten. Es ist jedoch auch möglich, das U-Profil 23 gegenüber dem Seitenschenkel 21 über weitere Halterollen 33 und 34 abzustützen.

An dem U-Profil 23 befindet sich der entsprechende Befestigungshaken 12 zum Einhängen der Endloskette 13 und ferner auch die die Umlenkrolle 8 zwischen sich aufnehmenden Laschen 7. Letztere können ggfs. entlang einem Teil des U-Profils 23 verschiebbar sein.

**Ansprüche**

1. Vorrichtung zum Vorliefern von Holzstämmen mit einem von einer Winde abrollbaren Seil, welches nach der Winde über eine Rolle geführt ist, die an einer etwa horizontalen Führung etwa senkrecht zur Vorlieferrichtung der Holzstämme verschiebbar angeordnet ist, dadurch gekennzeichnet, daß die Führung (2) als Doppelführung (17) ausgebildet ist, an welcher zumindest zwei Umlenkrollen (8a, 8b) für zwei getrennte Seile (9a, 9b) verschiebbar angeordnet sind.

2. Vorrichtung nach Anspruch 1, dadurch gekennzeichnet, daß jede Umlenkrolle (8a, 8b) mit einer eigenen Laufkatze (6a, 6b, 22) verbunden ist.

3. Vorrichtung nach Anspruch 2, dadurch gekennzeichnet, daß jeder Laufkatze (6a, 6b, 22) ein eigener Antrieb bzw. eine eigene Antriebsrolle (14a, 14b) zugeordnet ist.

4. Vorrichtung nach einem der Ansprüche 1 bis 3, dadurch gekennzeichnet, daß die Doppelführung (17) zwischen einem Stützschild (1) und einem Stützgerüst (3) eingespannt ist.

5. Vorrichtung nach wenigstens einem der Ansprüche 1 bis 4, dadurch gekennzeichnet, daß die Doppelführung (17) aus zwei nebeneinanderliegenden Rohren (2a, 2b) od. dgl. Hohlprofilen besteht, wobei die Laufkatze (6a, 6b) dem Querschnitt dieser Hohlprofile angepaßt ist.

6. Vorrichtung nach wenigstens einem der Ansprüche 1 bis 4, dadurch gekennzeichnet, daß die Doppelführung (17) aus einem H-Profil (20) besteht, dessen Seitenschenkel (21) jeweils von einer Laufkatze (22) umgriffen werden.

7. Vorrichtung nach Anspruch 6, dadurch gekennzeichnet, daß die Laufkatze (22) aus einem U-förmigen Profil (23) besteht, welches die Seitenschenkel (21) mit Laufrollen (28, 31) umgreift.

8. Vorrichtung nach Anspruch 7, dadurch gekennzeichnet, daß sich das U-Profil über Halterollen (33, 34) gegen den Seitenschenkel (21) abstützt.

9. Verfahren zum Vorliefern von Holzstämmen mit einem von einer Winde abrollbaren Seil, welches nach der Winde über eine Rolle geführt wird, die an einer etwa horizontalen Führung etwa senkrecht zur Vorlieferrichtung der Holzstämme verschiebbar angeordnet ist, dadurch gekennzeichnet, daß zumindest zwei Seile getrennt voneinander in zwei unterschiedliche Richtungen ausgezogen und eingeholt werden, wobei die Position der jeweiligen Umlenkrollen an der Führung getrennt angesteuert wird.

Fig.1

EP 0 296 514 A2

Fig. 2

Fig. 3

EP 0 296 514 A2